(19)

Europäisches
Patentamt
European
Patent Office
Office européen
des brevets

(11) **EP 3 605 144 A1**

(12) **EUROPEAN PATENT APPLICATION**
published in accordance with Art. 153(4) EPC

(43) Date of publication:
**05.02.2020 Bulletin 2020/06**

(51) Int Cl.:
*G01S 7/526* (2006.01)          *G01S 7/524* (2006.01)

(21) Application number: **17895507.6**

(22) Date of filing: **22.03.2017**

(86) International application number:
**PCT/JP2017/011426**

(87) International publication number:
**WO 2018/173148 (27.09.2018 Gazette 2018/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Aquafusion, Ltd.**
**Kobe-shi, Hyogo 650-0046 (JP)**

(72) Inventors:
• **SASAKURA, Toyoki**
  **Tokyo 135-0091 (JP)**
• **MATSUO, Ikuo**
  **Sendai-shi**
  **Miyagi 984-0056 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **ECHO SOUNDING DEVICE AND ECHO SOUNDING METHOD**

(57)     An echo sounding apparatus which is attached to a moving object and detects a measurement target in the water has: a transmission signal forming unit having a pseudo noise sequence generating circuit for generating a pseudo noise sequence signal and a modulating circuit for forming a transmission signal by modulating a carrier signal by the pseudo noise sequence signal of transmission timing; a transmitting unit for transmitting the transmission signal as an ultrasonic wave into the water; a receiving unit for receiving a reception signal including a true echo, a ghost of the transmission signal, and a ghost of the reception signal; a correlator for measuring a distance to the measurement target on the basis of a time difference between the transmission signal and the true echo by executing a correlating process to the reception signal by the pseudo noise sequence signal; and a ghost eliminating circuit for eliminating the ghost of the transmission signal and/or the ghost of the reception signal, wherein assuming that a velocity of the sound wave in the water is equal to Vu and the distance to the measurement target is equal to D, a period of the transmission signal is set to a value of (2D/Vu) or less.

Fig. 5

EP 3 605 144 A1

**Description**

[Technical Field]

The present invention relates to an echo sounding apparatus and an echo sounding method in which a restriction due to a velocity of an ultrasonic wave is eliminated and a transmission signal can be transmitted at a short period.

[Background Art]

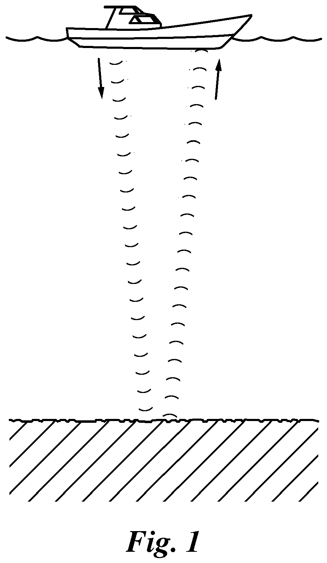

An echo sounding technique in the ocean has been used for long. As shown in Fig. 1, an ultrasonic pulse is generated from an ultrasonic transducer, an echo obtained when its sound wave is reflected from a target (sea bottom) is captured, and its depth is measured by using a propagation speed (about 1500 m/sec) of the sound wave in the water. An echo sounding apparatus using such a principle has been realized as a product 50 or more years ago. Even nowadays, a depth of sea bottom is measured by using such a principle. Such a technique called "echo location" has continuously been used without being changed, in other words, without being developed.

Such a principle is as follows. An ultrasonic pulse (for example, a pulse width of 1 msec) is generated. In the case of the sea bottom of 500m, now assuming that an underwater velocity Vu of the sound wave is equal to 1500 m/sec, the sound wave is returned after (1000/Vu = 1000/1500 = 0.667 second). Therefore, after its echo was received, an ultrasonic pulse is again generated and a sea bottom at a location which differs by a distance where a ship progressed simultaneously is measured. Such an apparatus that a depth of the sea bottom is sequentially measured in association with the navigation of the ship as mentioned above and measured depths are recorded onto recording paper or displayed as images onto a liquid crystal display screen is called "echo sounding apparatus" (for example, refer to Patent Literature (PTL) 1).

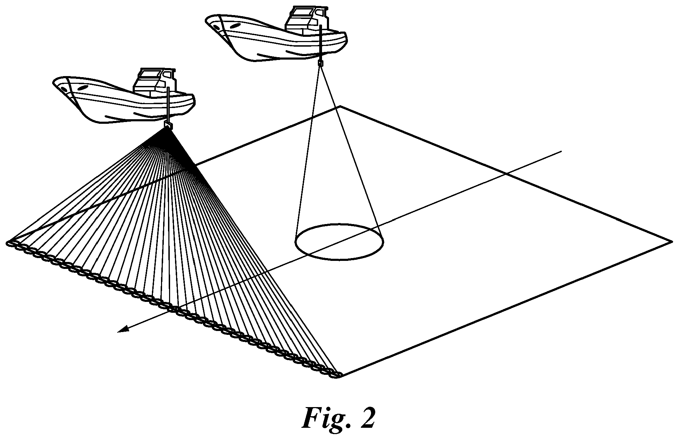

According to the echo sounding apparatus so far, a transmitting interval is controlled so as not to transmit the next pulse before a reception echo is received in consideration of an underwater sound velocity of the ultrasonic wave, and the sounding is performed. As shown in Fig. 2, a sounding apparatus equipped with only one beam is called a single beam sounding apparatus and a sounding apparatus which has been proposed in recent years and in which a plurality of beams are spread in a fan shape is called a multibeam sounding apparatus (for example, refer to PTL 2). The multibeam sounding apparatus can measure depths in a wide range in a lump.

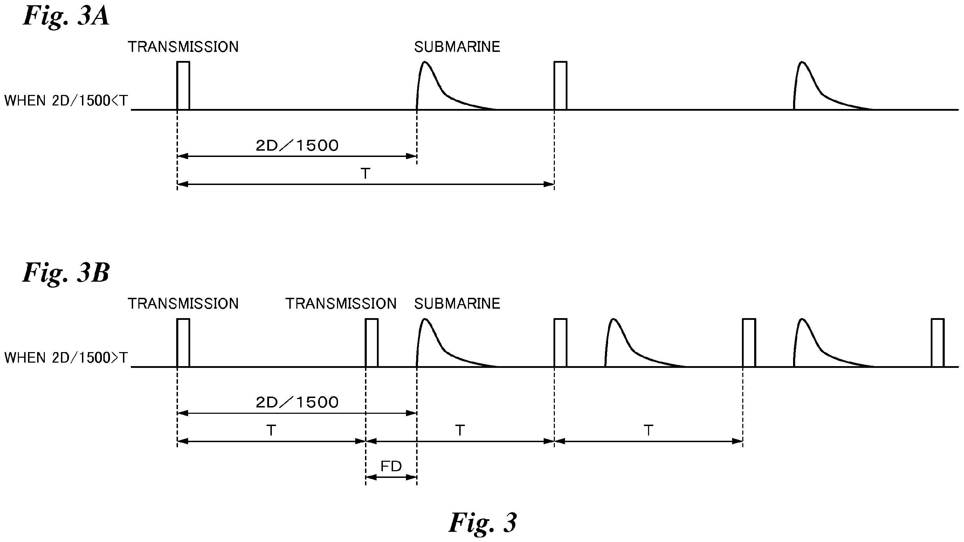

It is now assumed that a depth is equal to D and a transmitting interval of the transmission pulse is equal to T. When (2D/1500) < T, as shown in Fig. 3A, a time difference between the transmission pulse and the reception echo corresponds to (2D/1500). The depth can be measured from the time difference. However, when (2D/1500) $\geq$ T, as shown in Fig. 3B, the reception echo arrives after the next transmission pulse was transmitted. Therefore, to which one of the transmission pulses the reception echo corresponds cannot be known. A wrong depth is measured on the basis of such a time difference FD. It is, therefore, a condition of (2D/1500) < T is necessary hitherto.

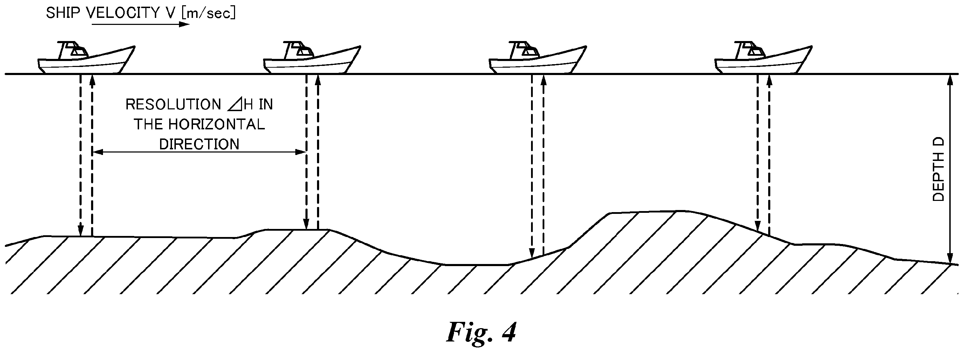

Such a point that the transmitting period cannot be shortened results in that a resolution in the horizontal direction of the sounding cannot be decreased. A resolution of a measurement in the progressing direction (horizontal direction) of a ship will be described with reference to Fig. 4. A resolution $\Delta H$ (m) in the horizontal direction in the case of performing the sounding of a depth D (m) at a ship velocity V (m/sec) is obtained by the following equation.

$$\Delta H = VT > 2DV/1500$$

For example, if the ship sails at 10 kt (speed per hour: 10 $\times$ 1.852 km) and the transmitting period is equal to 1 second, sounding data can be obtained only every about 5 m. To measure a sea bottom of a depth of 1000m, it can be measured only when the transmitting period T is set to ((1000 $\times$ 2)/1500 = 1.33 seconds) or more. However, if the ship sails at 10 kt, the ship progresses by 6.7 m after 1.33 seconds. Therefore, the resolution $\Delta H$ of the measurement is equal to 6.67 m. Although the multibeam sounding apparatus can measure depths in a wide range in a lump, the resolution of the measurement in the progressing direction of the ship is similar to that in the case of the single beam.

In the conventional echo sounding apparatus, in order to raise the resolution of the measurement, there is only a method of reducing the velocity of the ship. Therefore, the conventional echo sounding apparatus has such a problem that in the case of raising the resolution in the horizontal direction of the sounding, a time required for the sounding becomes long.

The inventors of the present invention has proposed an echo sounding apparatus which can solve such a problem. That is, a transmission signal is formed by a pseudo noise sequence signal, an echo of an ultrasonic wave is received, and a correlating process is executed to the echo by the pseudo noise sequence signal, thereby discriminating the echo corresponding to the transmission signal and obtaining depth raw data on the basis of a time difference between the transmission signal and the echo. Now, assuming that a velocity of a sound wave in the water is equal to Vu and a depth is equal to D, a period of the transmission signal can be set to a value of (2D/Vu) or less.

[Citation List]

[Patent Literature]

[PTL 1] JP 2001-083247 A
[PTL 2] JP 2006-220436 A

[Summary of Invention]

[Technical Problem]

It is better if a receiving unit can receive only a true echo. However, actually, there is such a problem that a ghost of a transmission signal and a ghost of a reception signal exist mixedly and an accurate measurement is obstructed.
It is, therefore, an object of the present invention to provide an echo sounding apparatus and an echo sounding method in which an influence of a ghost is eliminated and an accurate measurement can be performed.

[Solution to Problem]

The first invention of the present invention is an echo sounding apparatus which is attached to a moving object such as a ship or the like and detects a measurement target in the water, comprising:

a transmission signal forming unit having a pseudo noise sequence generating circuit for generating a pseudo noise sequence signal and a modulating circuit for forming a transmission signal by modulating a carrier signal by the pseudo noise sequence signal of transmission timing;
a transmitting unit for transmitting the transmission signal as an ultrasonic wave into the water;
a receiving unit for receiving a reception signal including a true echo, a ghost of the transmission signal, and a ghost of the reception signal;
a correlator for measuring a distance to the measurement target on the basis of a time difference between the transmission signal and the true echo by executing a correlating process to the reception signal by the pseudo noise sequence signal; and
a ghost eliminating circuit for eliminating the ghost of the transmission signal and/or the ghost of the reception signal, wherein assuming that a velocity of the sound wave in the water is equal to Vu and the distance to the measurement target is equal to D, a period of the transmission signal is set to a value of (2D/Vu) or less.

The second invention of the present invention is an echo sounding method of detecting a measurement target in the water by an echo sounding apparatus attached to a moving object such as a ship or the like, comprising the steps of:

generating a pseudo noise sequence signal by a pseudo noise sequence generating circuit and forming a transmission signal by modulating a carrier signal by the pseudo noise sequence signal of transmission timing;
transmitting the transmission signal as an ultrasonic wave into the water;
receiving a reception signal including a true echo, a ghost of the transmission signal, and a ghost of the reception signal;
measuring a distance to the measurement target on the basis of a time difference between the transmission signal and the true echo by executing a correlating process to the reception signal by a correlator by the pseudo noise sequence signal; and
eliminating the ghost of the transmission signal and/or the ghost of the reception signal by a ghost eliminating circuit, wherein assuming that a velocity of the sound wave in the water is equal to Vu and the distance to the measurement target is equal to D, a period of the transmission signal is set to a value of (2D/Vu) or less.

The third invention of the present invention is an echo sounding apparatus which is attached to a moving object such as a ship or the like and detects a measurement target in the water, comprising:

a transmission signal forming unit having a pseudo noise sequence generating circuit for generating a pseudo noise sequence signal and a modulating circuit for forming a transmission signal by modulating a carrier signal by the pseudo noise sequence signal of transmission timing;

a transmitting unit for transmitting the transmission signal as an ultrasonic wave into the water;

a receiving unit for receiving a reception signal including a true echo, a ghost of the transmission signal, and a ghost of the reception signal;

a correlator for measuring a distance to the measurement target on the basis of a time difference between the transmission signal and the true echo by executing a correlating process to the reception signal by the pseudo noise sequence signal; and

a transmitting period changing circuit for changing a transmitting interval of the transmission signal so that timing of the true echo does not overlap with timing of the transmission ghost,

wherein assuming that a velocity of the sound wave in the water is equal to Vu and the distance to the measurement target is equal to D, a period of the transmission signal is set to a value of (2D/Vu) or less.

The fourth invention of the present invention is an echo sounding method of detecting a measurement target in the water by an echo sounding apparatus attached to a moving object such as a ship or the like, comprising the steps of:

generating a pseudo noise sequence signal by a pseudo noise sequence generating circuit and forming a transmission signal by modulating a carrier signal by the pseudo noise sequence signal of transmission timing;

transmitting the transmission signal as an ultrasonic wave into the water;

receiving a reception signal including a true echo, a ghost of the transmission signal, and a ghost of the reception signal;

measuring a distance to the measurement target on the basis of a time difference between the transmission signal and the true echo by executing a correlating process to the reception signal by a correlator by the pseudo noise sequence signal; and

changing a transmitting interval of the transmission signal by a transmitting period changing circuit so that timing of the true echo does not overlap with timing of the transmission ghost,

wherein assuming that a velocity of the sound wave in the water is equal to Vu and the distance to the measurement target is equal to D, a period of the transmission signal is set to a value of (2D/Vu) or less.

[Advantageous Effects of Invention]

According to the present invention, the transmission ghost and/or the reception ghost other than the true echo included in the reception signal can be eliminated and the accurate measurement can be performed. A display on the screen can be also easily observed. The effects disclosed here are not always limited but may be any of the effects disclosed in the present invention. The contents of the invention are not limitedly interpreted by the effects shown as examples in the following description.

[Brief Description of Drawings]

[Fig. 1] Schematic diagram showing a principle of an echo sounding.
[Fig. 2] Schematic diagram for describing a single beam sounding and a multibeam sounding.
[Fig. 3] Waveform diagrams for use in description of a conventional echo sounding apparatus.
[Fig. 4] Schematic diagram for use in description of a resolution in the horizontal direction of the conventional echo sounding apparatus.
[Fig. 5] Block diagram showing a construction of the first embodiment of the present invention.
[Fig. 6] Block diagram for use in description of a correlator in an echo sounding apparatus.
[Fig. 7] Waveform diagram for use in description of an output of the correlator.
[Fig. 8] Schematic diagram for use in description of a case of displaying reception signals.
[Fig. 9] Waveform diagram showing an example of a modulating method of a transmission signal.
[Fig. 10] Waveform diagram for use in description of the echo sounding apparatus.
[Fig. 11] Timing chart of a submarine echo before ghosts are eliminated.
[Fig. 12] Timing chart of a submarine echo after the ghosts were eliminated.
[Fig. 13] Block diagram of an example of a ghost eliminating circuit.
[Fig. 14] Timing chart of a reception signal after passing through the ghost eliminating circuit.
[Fig. 15] Block diagram of another example of the ghost eliminating circuit.
[Fig. 16] Timing chart for use in description of a generating method of a ghost replica of the transmission signal.

[Fig. 17] Timing chart of a reception signal after passing through the ghost eliminating circuit.

[Fig. 18] Schematic diagram showing a display image of the echo sounding apparatus.

[Fig. 19] Schematic diagram showing a display image of the echo sounding apparatus before the ghosts are eliminated and a display image of the echo sounding apparatus after the ghosts were eliminated.

[Fig. 20] Block diagram showing an example of a construction for generating a ghost replica of the transmission signal.

[Fig. 21] Timing chart for describing an eliminating method of a reception ghost.

[Fig. 22] Schematic diagram showing a difference of a way of appearance of submarine echoes in the case where a period of the transmission signal is constant and the case where the period is varied.

[Fig. 23] Timing chart for use in description of a condition in which the reception signal does not overlap with the transmission ghost.

[Fig. 24] Timing chart for use in description of a condition in which the reception signal does not overlap with the transmission ghost.

[Fig. 25] Timing chart for use in more specific description of a condition in which the reception signal does not overlap with the transmission ghost.

[Fig. 26] Timing chart for use in description of a case where a transmitting period is shortened and an overlap of a ghost and a submarine echo is prevented.

[Fig. 27] Block diagram of a construction in which a transmitting period change calculating circuit is added.

[Fig. 28] Flowchart showing a flow of a process of the transmitting period change calculating circuit.

[Description of Embodiments]

Embodiments of the invention will be described hereinbelow. The embodiments which will be described hereinbelow are exemplary specific examples of the invention and various kinds of limitations which are technically preferred are added. However, it is assumed that the scope of the invention is not limited to those embodiments unless otherwise described to limit the invention in the following explanation.

The invention will be described in accordance with the following order.

<1. First embodiment>

<2. Second embodiment>

<3. Modification>

<1. First embodiment>

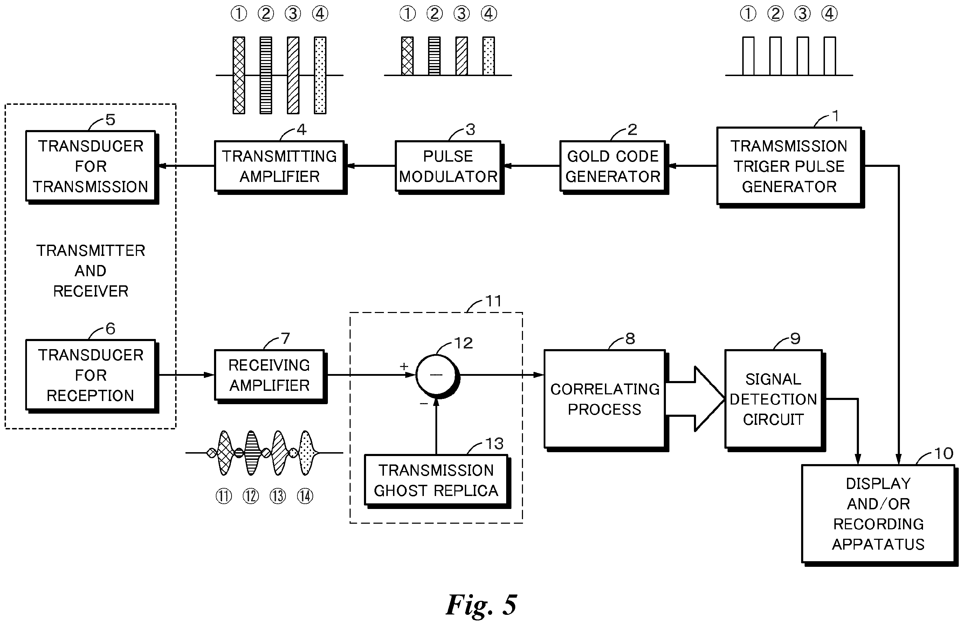

FIG. 5 shows an electrical construction of the first embodiment of the invention. A transmission trigger pulse generator 1 for generating a transmission trigger pulse of a pulse signal of a predetermined period is provided. The transmission trigger pulse is supplied to a gold code generator 2 as a PN sequence generator and a display or recording apparatus 10. The display and/or recording apparatus 10 includes: a display apparatus such as a liquid crystal or the like and/or a recording apparatus such as a semiconductor memory or the like; and an arithmetic operating apparatus for displaying or recording.

The gold code generator 2 generates a gold code synchronously with the transmission trigger pulse. A PN (Pseudo random Noise) sequence such as an M sequence or the like other than the gold code may be used. The gold code is supplied to a pulse modulator 3. The gold code is digital-modulated by, for example, a BPSK (Binary Phase Shift Keying). A frequency of a carrier is set to a few kHz to hundreds of kHz.

An output signal of the pulse modulator 3 is supplied to a transmitting amplifier 4. A process such as an amplification or the like is executed in the transmitting amplifier 4. An output signal of the transmitting amplifier 4 is supplied to a transmitter 5. An ultrasonic wave is transmitted into the water from the transmitter 5. An echo of the emitted underwater ultrasonic wave is received by a receiver 6. An integrated construction may be used as a transmitter 5 and a receiver 6.

Reception data from the receiver 6 is supplied to a receiving amplifier 7, is subjected to a process such an amplification or the like, and is thereafter supplied to a ghost eliminating circuit 11. The ghost eliminating circuit 11 has a subtractor 12 and a transmission ghost replica memory 13. In the subtractor 12, a transmission ghost replica from the transmission ghost replica memory 13 is subtracted from the reception data from the receiving amplifier 7. The ghost eliminating circuit 11 will be described in detail hereinafter.

An output of the ghost eliminating circuit 11 is supplied to a correlator 8. An output of the correlator 8 is supplied to a detecting circuit 9. A reception echo corresponding to the transmission pulse is extracted by the correlator 8. The detecting circuit 9 executes an arithmetic operation (for example, A/D conversion) for displaying. An output of the detecting circuit 9 is supplied to the display and/or recording apparatus 10. A time which is required until the echo is received in response to the transmission pulse is displayed and/or recorded, respectively.

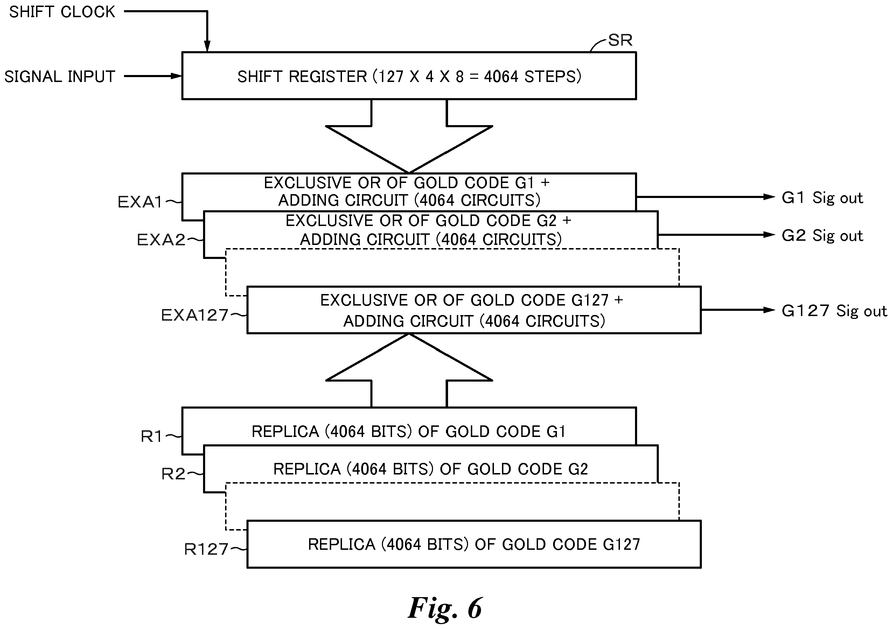

Fig. 6 shows a correlation detecting process. The receiving echo signal is serially input to a shift register SR of 4064 steps. It is desirable to improve an S/N ratio by performing an addition of a plurality of front and rear receiving echo signals or the like to the shift register SR. Noises can be reduced by the adding process, a low transmission output can be realized, and a miniaturization and a design for saving electric power consumption of the apparatus can be accomplished. It is assumed that a shift clock for making the shift register SR operative is set to $(20 \times 8 = 1600$ kHz $= 1.6$ MHz). Such a frequency is shown as an example and a shift clock of a frequency which is two or more times as high as a carrier frequency (20 kHz) can be used. The receiving echo signal is supplied to the shift register SR, so that it is sampled at a frequency which is eight times as high as that of a carrier signal.

Arithmetic operating circuits $EXA_1$ to $EXA_{127}$ are provided for the shift register SR in parallel. Each of the arithmetic operating circuits $EXA_1$ to $EXA_{127}$ is constructed by an exclusive OR circuit and adding circuits (4064 circuits). 4064 bits of the shift register SR are supplied in common to the exclusive OR circuit of each of the arithmetic operating circuits $EXA_1$ to $EXA_{127}$.

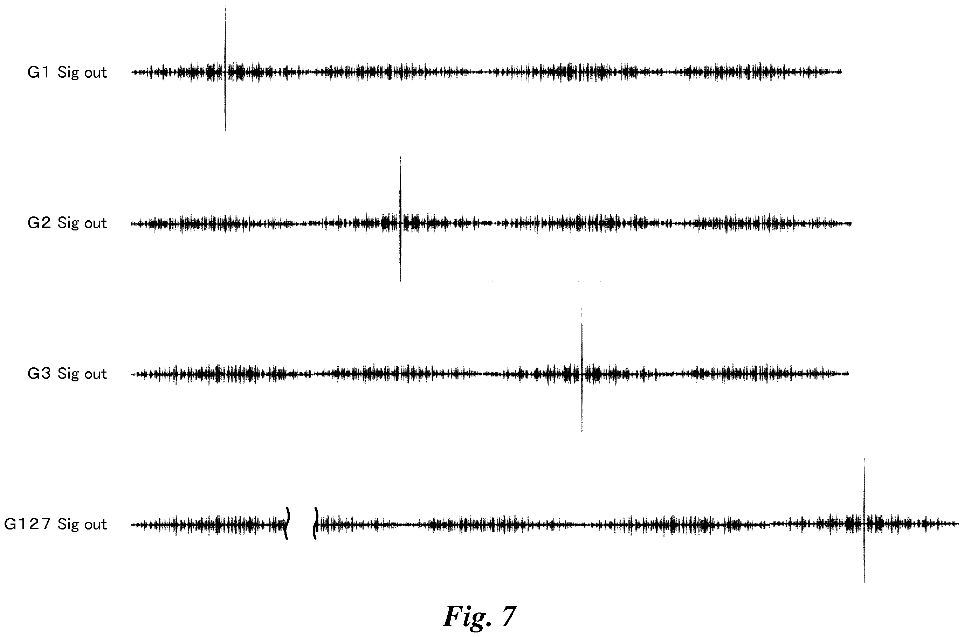

A replica (replica of 4064 bits) of a code $G_1$ of the gold code, a replica of a code $G_2$, ..., and a replica of a code $G_{127}$ are supplied to the exclusive OR circuits of the respective arithmetic operating circuits $EXA_1$ to $EXA_{127}$. If bits of two inputs have the same value, an output of the exclusive OR circuit is equal to "0", and if the bits of the two inputs have different value, the output is equal to "1". The outputs of 4064 bits of the respective exclusive OR circuits are added. As for the addition, if the number of "1" is equal to N, a signal of an amplitude of a value of N is output. By getting a negative OR, the larger a degree of coincidence of the two inputs is, the output of a large value is obtained. The addition values of the arithmetic operating circuits $EXA_1$ to $EXA_{127}$ are as shown in Fig. 7. The output of a large amplitude indicates the receiving echo signal which coincides with the gold code of the transmission pulse.

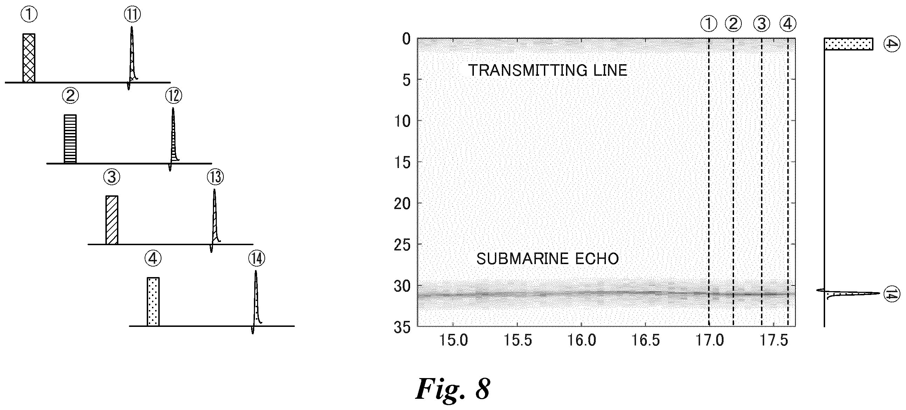

Fig. 8 is a diagram for describing the case where the display is performed in the display and/or recording apparatus 10. The transmission trigger pulse is supplied to the display and/or recording apparatus 10. Timing of the transmission trigger pulse is displayed as a transmitting line (0 m) on the upper side of a display screen. A detection signal from the detecting circuit 9 responsive to the transmission trigger pulse is displayed in a state where, for example, it is colored. Since the transmission trigger pulse is a fast cyclic signal in a range from a few Hz to tens of Hz, by displaying the detection signals corresponding to the transmission trigger pulses from a correlator 8 so as to be aligned in order, a sounding image appears at a speed which is a few to tens of times as high as that of the conventional echo sounding apparatus.

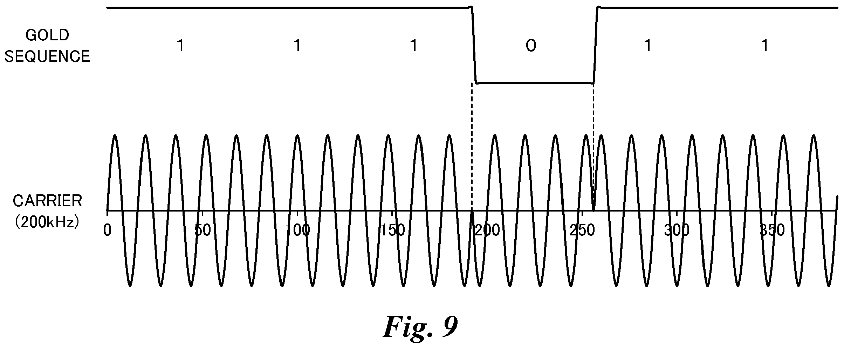

Fig. 9 is a diagram for describing an example of a pulse modulation. For example, a phase is switched to 0 and $\pi$ in correspondence to "0" and "1" of the bits of the gold code every four periods (4 waves) of a carrier of, for example, 200 kHz. The frequency of the carrier is an example and may be another frequency. A modulation system such as QPSK or the like other than BPSK may be used. Further, the invention is not limited to the phase modulation but an amplitude modulation may be used.

In the correlator 8, a correlation is detected by a digital signal process. One bit is constructed by 4 periods and each period is digitized by eight samples. Therefore, if a code of the gold code is constructed by 127 bits, one receiving echo signal is constructed by $(127 \times 4 \times 8 = 4064$ bits).

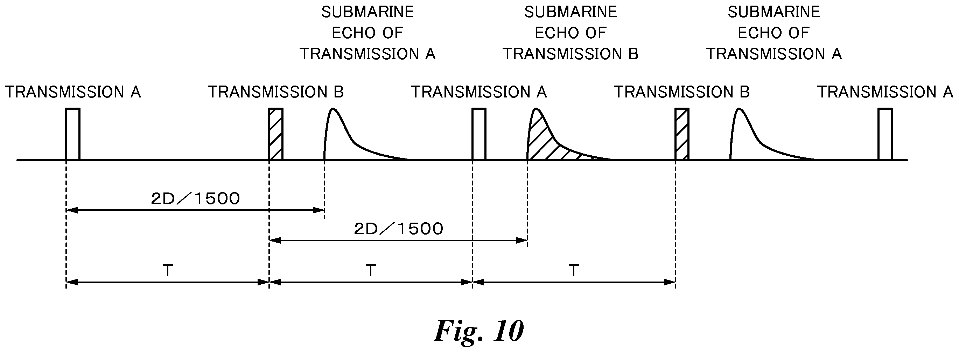

In the foregoing improved echo sounding apparatus, the transmission signal and the receiving echo signal (submarine echo) can be identified. As shown in Fig. 10, a transmission signal A and a transmission signal B are set to different gold codes. The receiving echo signal corresponding to the transmission signal A is received after the transmission signal B and it can be identified that the receiving echo signal is a signal corresponding to the transmission A. Therefore, a restriction $((2D/1500) < T)$ regarding a transmitting period T as shown in the related arts can be eliminated.

In the improved echo sounding apparatus, a resolution in the horizontal direction is shown by the following equation.

$$\Delta H = VT$$

For example, in the case where a ship sails at 10 kt (speed per hour: $10 \times 1.852$ km) and the transmitting period is equal to 0.01 second, $\Delta H = 0.05$ m. The resolution (measuring interval) in the horizontal direction can be determined irrespective of a sounding depth. The resolution $\Delta H$ in the horizontal direction is determined only from the transmitting period T and a ship velocity V irrespective of the depth. As mentioned above, the transmitting period T can be set to a short period, the sounding can be performed irrespective of the depth, and the high horizontal measuring resolution can be obtained.

Although the transmission signals can be also identified by the frequency or the like, according to a frequency discriminating system, if a frequency range which is used is widened, since a propagation loss in the water differs depending on the frequency, a frequency difference occurs in the detected distances or the like and it is, therefore, undesirable. In the improved echo sounding apparatus, since the transmission signals are identified by one frequency, such a problem does not occur. In other words, since the transmission signals can be identified, such a restriction of the transmitting period that after the echo of the sea bottom was returned, the next transmission signal is emitted as in the related arts is eliminated. The sounding can be performed at the short transmitting period. The resolution in the horizontal direction can be remarkably improved.

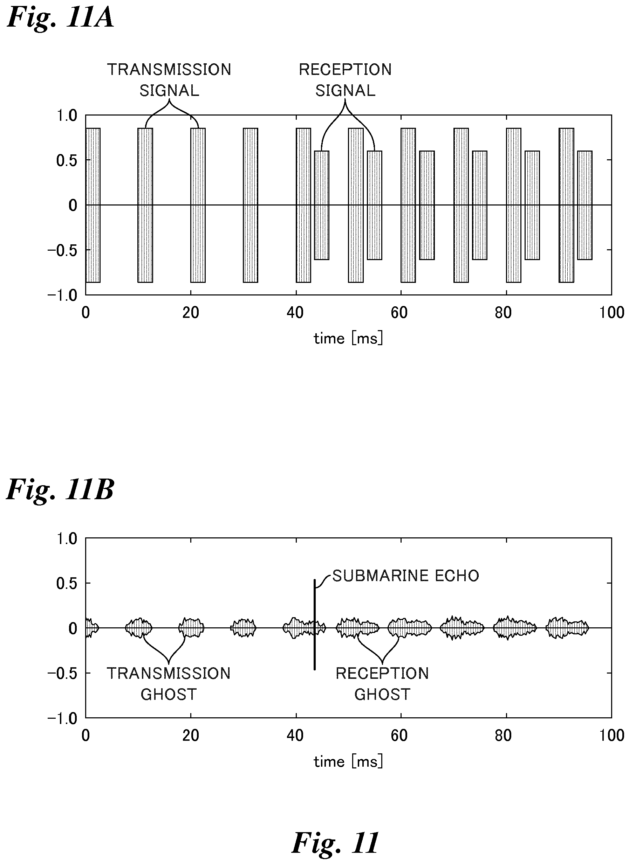

Subsequently, the ghost eliminating circuit 11 of the first embodiment of the present invention will be described. Fig. 11A shows raw waveforms of the transmission signals and the reception signals of the echo sounding apparatus. In the example of Fig. 11A, the transmitting interval is equal to 10 msec and, as the number of transmitting times, the transmission signal and the reception signal appear at a rate of 100 times per second. By allowing the raw waveforms to pass through the correlator shown in Fig. 6, waveforms after the correlating process as shown in Fig. 11B are obtained.

Since a ghost of the transmission (properly referred to as a transmission ghost) and a ghost of the reception (properly referred to as a reception ghost) other than the inherent submarine echo appear in the waveforms after the correlating process, there is a case where the measurement based on the submarine echo serving as a target is obstructed. The invention, therefore, intends to eliminate the transmission ghost and the reception ghost which become an obstruction.

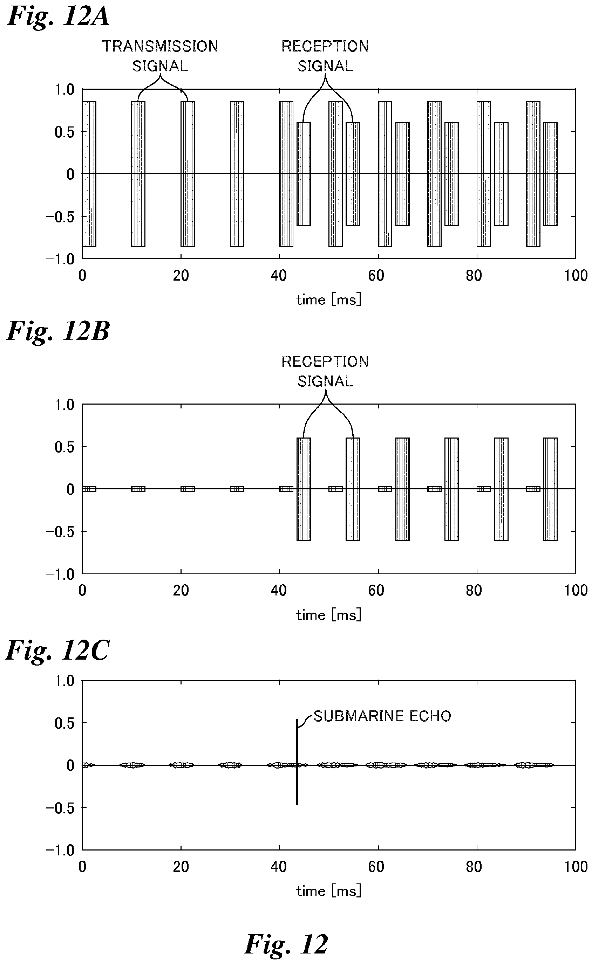

Fig. 12A shows waveforms similar to those in Fig. 11A. Fig. 12B shows waveforms after the transmission ghost signals were eliminated from the waveforms of Fig. 12A. After the transmission ghost signals were eliminated, only reception signals remain. Therefore, if the waveforms are correlation-processed, they become waveforms as shown in Fig. 12C. Although it is presumed that the ghost of the transmission waveform remains slightly, the reception signals in which an influence of the ghosts is small are obtained.

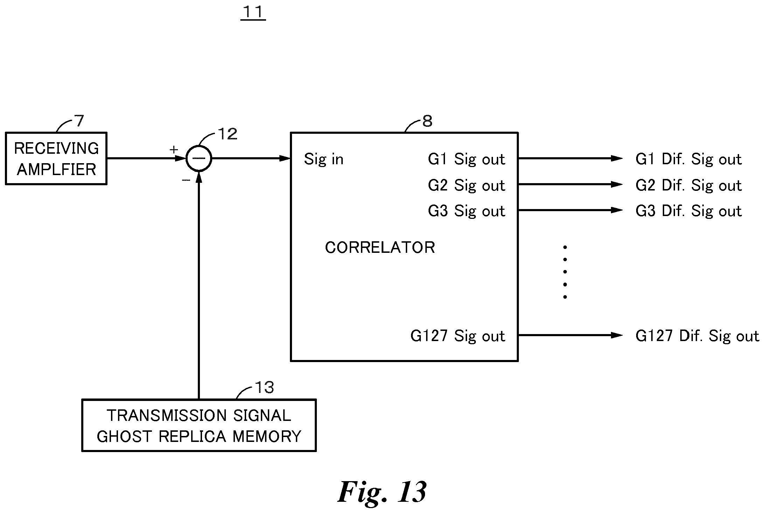

The ghost eliminating circuit 11 and the correlator 8 are shown in Fig. 13 although they are also shown in the block diagram of the whole construction of Fig. 5. As shown in Fig. 13, a transmission signal ghost replica waveform which has previously been stored is subtracted from the output signal of the receiving amplifier 7 by the subtracting circuit 12, so that the ghosts can be eliminated. If the signals after the ghost elimination from the subtracting circuit 12 are correlation-processed by the correlator 8, the signals in which the ghosts were eliminated can be obtained.

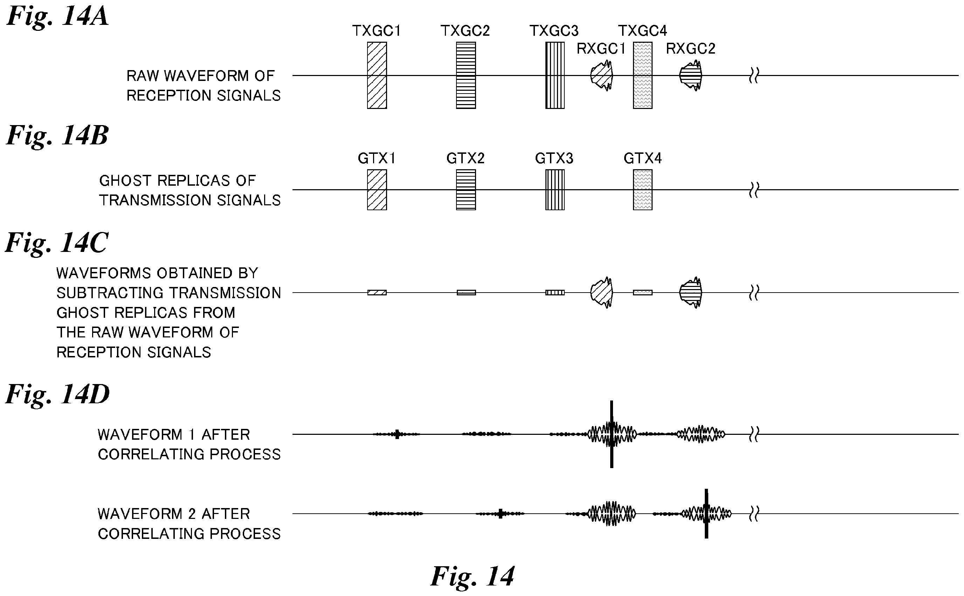

Fig. 14A shows raw waveforms of transmission signals ($TXGC_1$, $TXGC_2$, $TXGC_3$, ...) and reception signals ($RXGCi$, $RXGC_2$, $RXGC_3$, ...). Fig. 14B shows ghost replicas of the transmission signals and corresponds to an output signal of the subtracting circuit 12. Two examples (waveform 1 and waveform 2) of the waveforms after the correlating process of the correlator 8 are shown in Fig. 14D.

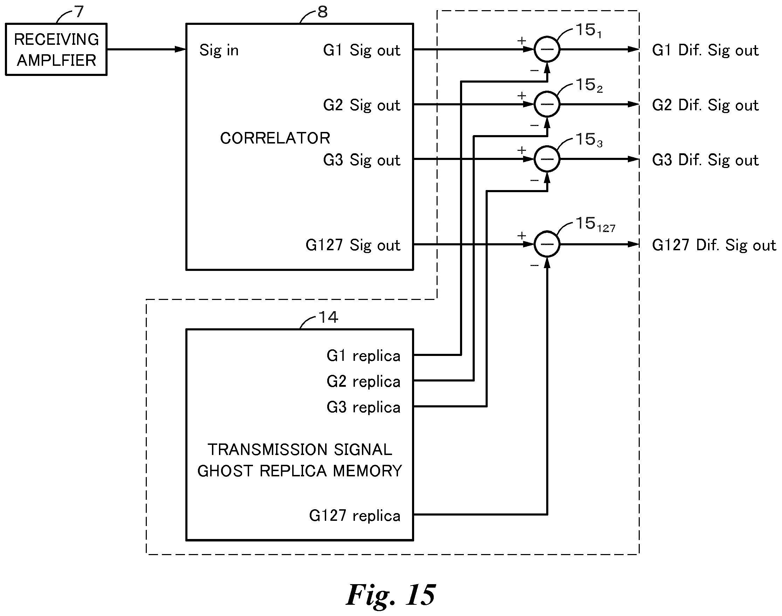

The ghost eliminating process is not limited to timing before the correlating process but can be also executed after the correlating process. As shown in Fig. 15, transmission signal ghost replicas after the correlating process are stored in a transmission signal ghost replica memory 14. The corresponding transmission signal ghost replicas are subtracted from the signals after the correlating process from the correlator 8 by subtracting circuits $15_1$, $15_2$, ..., and $15_{127}$, so that the ghost eliminating process can be executed.

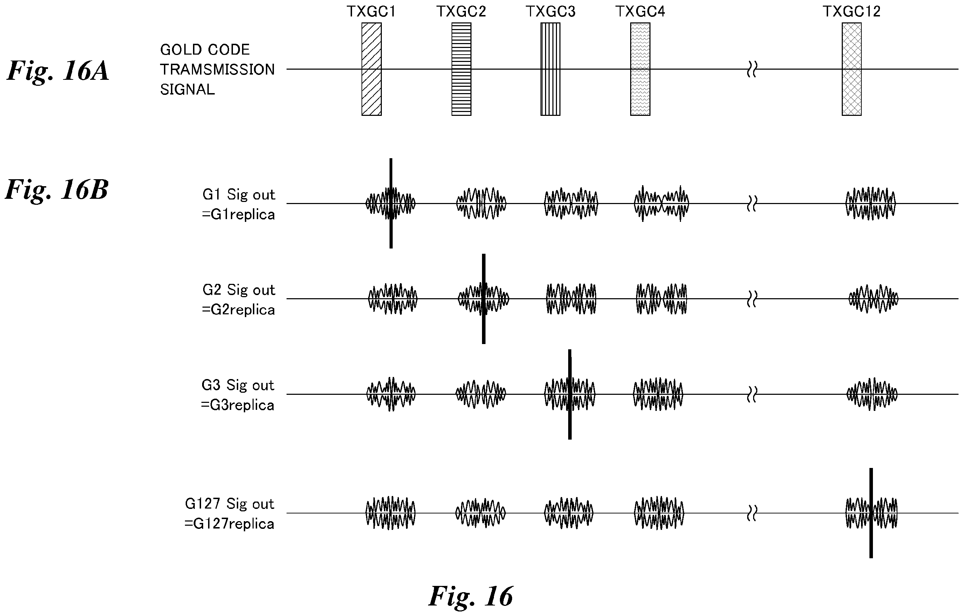

A generating method of the transmission signal ghost replicas will be described with reference to Fig. 16. The transmission signals shown in Fig. 16A are input to the correlator and 127 kinds of correlation output signals ($G_{1replica}$, $G_{2replica}$, ..., $G_{127replica}$) shown in Fig. 16B become ghost replica signals. Those ghost replica signals are stored into the transmission signal ghost replica memory 14.

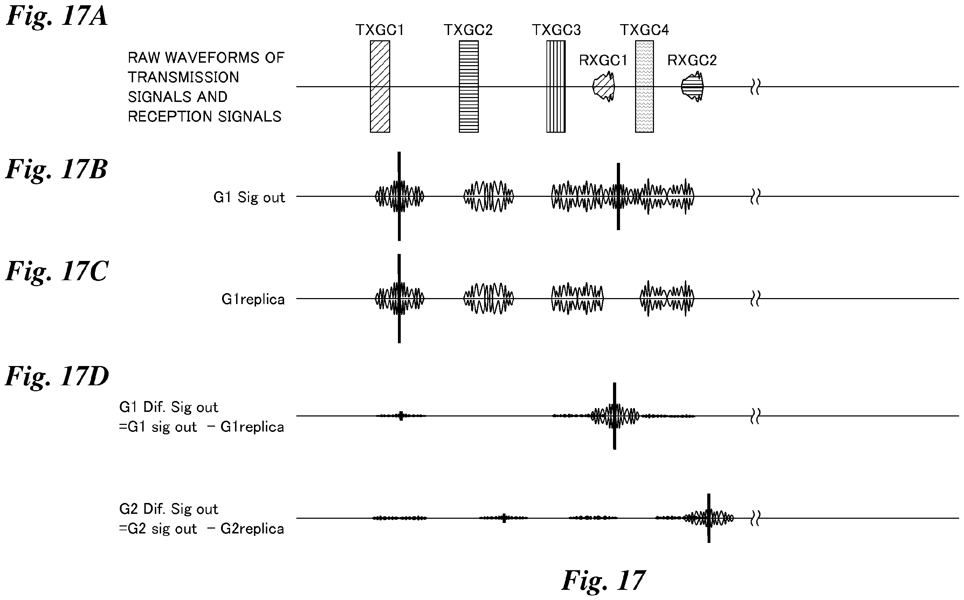

Fig. 17 is a waveform diagram showing a process for eliminating the transmission signal ghosts. Fig. 17A shows raw waveforms of the transmission signals and the reception signals of the echo sounding apparatus. Fig. 17B shows an output, for example, a $G_1$ signal output which is obtained from the correlator 8 by outputting the raw waveforms to the correlator 8. Fig. 17C shows a corresponding transmission signal ghost replica $G_1$ stored in the transmission signal ghost replica memory 14.

The transmission signal ghost replica $G_1$ is subtraction-processed from the $G_1$ signal output by the subtracting circuits $15_1$, so that a reception signal after the ghost elimination is obtained as shown in Fig. 17D. The ghosts can be also similarly eliminated with respect to other outputs of the correlator 8. A signal after the ghost elimination regarding the $G_1$ signal output and a signal after the ghost elimination regarding the $G_2$ signal output are shown in Fig. 17D.

According to the foregoing ghost eliminating circuit shown in Fig. 15, a memory scale and a circuit scale are larger than those of the ghost eliminating circuit (Fig. 13) for executing the ghost process before the foregoing correlating process. Further, if the ghost eliminating process before the correlating process and the ghost eliminating process after the correlating process are executed together, a ghost eliminating effect can be enhanced.

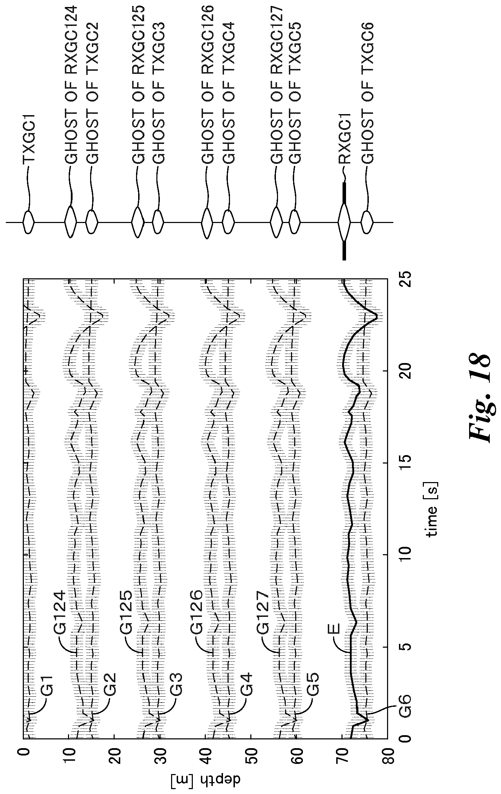

Fig. 18 shows an example of a display image of the echo sounding apparatus in the case where the ghost eliminating process is not executed. An axis of abscissa of a display screen indicates a time and an axis of ordinate denotes a water depth. Reception signals including the ghosts which cause a display are shown on the side of the screen. The following signals are included in order in the reception signal and cause a display in the screen, respectively. For example, the number of transmitting times is equal to 50 times/sec.

Transmission signal $TXGC_1$: sea level (water depth: 0 m)

True reception signal $RXGC_1$: display E (waveform which undulates at a location near a water depth of about 70 m) of a true submarine echo

Ghosts of the transmission signals $TXGC_2 \sim TXGC_6$: transmission ghosts $G_2 \sim G_6$ (appear rectilinearly every 15 m) corresponding to them

Ghosts of the reception signals $RXGC_{124} \sim RXGC_{127}$: reception ghosts $GE_{124} \sim GE_{127}$ (ghosts of the submarine echo) corresponding to them

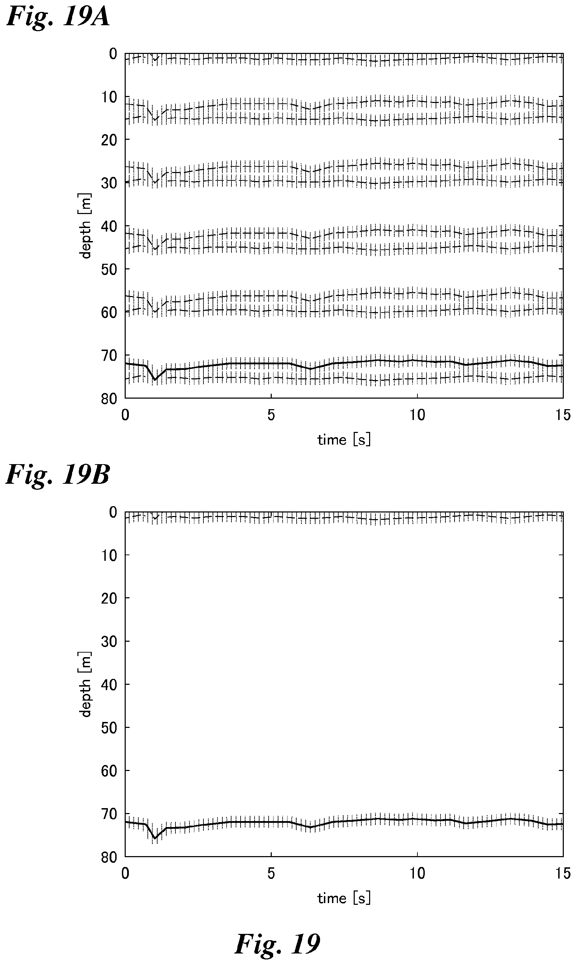

Now, assuming that the ghosts can be eliminated, as will be understood by comparing a display image before the ghost elimination shown in Fig. 19A with a display image after the ghost elimination shown in Fig. 19B, an image which can be easily observed can be obtained. Fig. 19 shows an image (Fig. 19B) at the time when the ghosts were eliminated from the image (Fig. 19A) obtained by experiments in the actual sea.

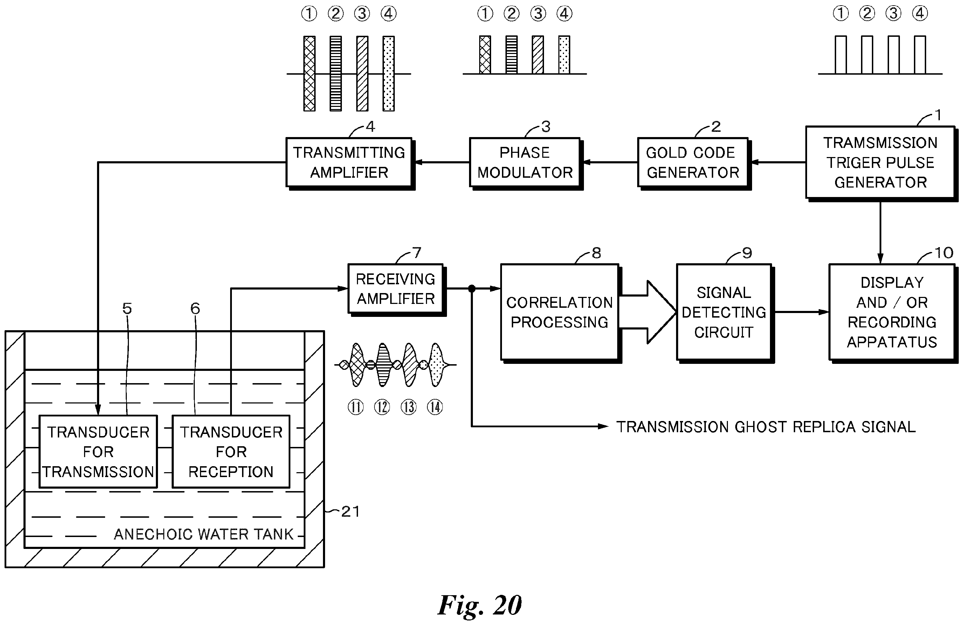

An example of a generating method of the transmission ghost replicas will now be described with reference to Fig. 20. It is assumed that component elements corresponding to those in Fig. 5 are designated by the same reference numerals. A transducer 5 for transmission and a transducer 6 for reception are enclosed in an anechoic water tank 21 filled with the water. A reason why the anechoic water tank 21 is used is that unnecessary reception signals are not caused. The ordinary echo sounding is performed and the reception signals corresponding to the transmission signals are stored as transmission ghost replicas into the transmission ghost replica memory. In place of the anechoic water tank 21, transmission and reception may be performed in such a sea that no receiving echo appears and transmission ghost replicas may be similarly obtained.

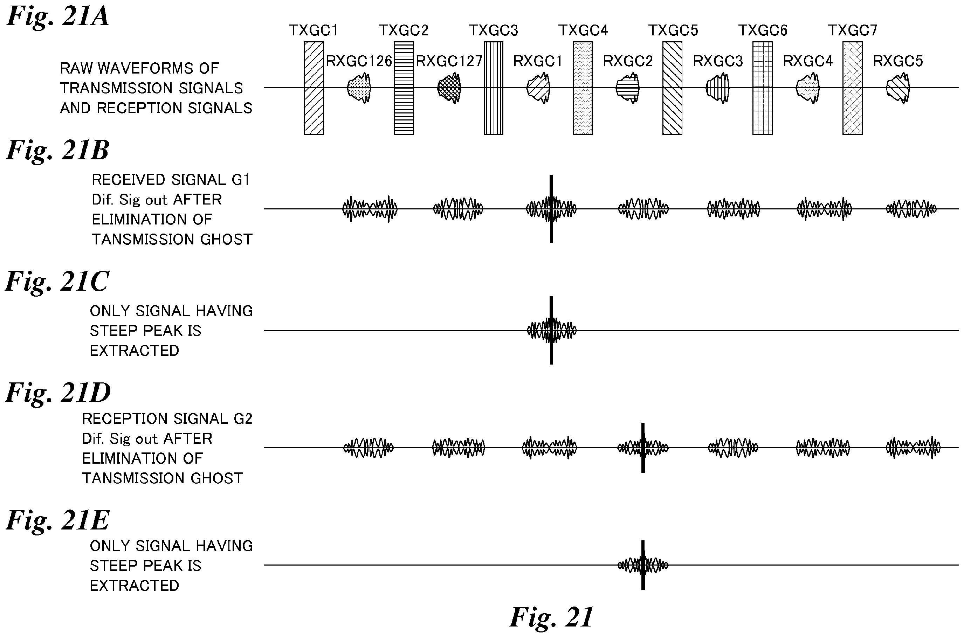

Since the ghosts also appear to the reception signals, it is also necessary to eliminate the ghosts of the reception signals. Fig. 21 shows an example of a ghost eliminating method of a reception signal. Fig. 21A shows raw waveforms of the transmission signals and the reception signals. Fig. 21B shows one signal output at the time when the reception signals after the transmission ghost elimination were processed by the correlator 8. If only the signal having a steep peak in the waveforms of Fig. 21B is extracted, it becomes as shown in Fig. 21C. Similarly, other signal outputs of the correlator 8 and waveforms extracted therein are shown in Figs. 21D and 21E, respectively.

As shown in Figs. 21B to 21E, as for the reception signals after the correlating process, there is a clear difference between the true echo and the ghost echo. This is because although the true echo becomes a waveform having a steep peak, the ghost echo becomes a waveform without a steep peak. Therefore, as for the ghost elimination of the reception signals, the ghost elimination can be performed by a method whereby, after the correlating process, only the waveforms having the steep peak are left and other signals are deleted.

<2. Second Embodiment>

Subsequently, the second embodiment of the present invention will be described. The second embodiment relates to a method whereby a transmitting period is changed so that the transmission ghosts and the reception signal do not overlap. That is, it is a method whereby the transmitting period is adjusted so that the transmission ghosts and the receiving echo do not overlap.

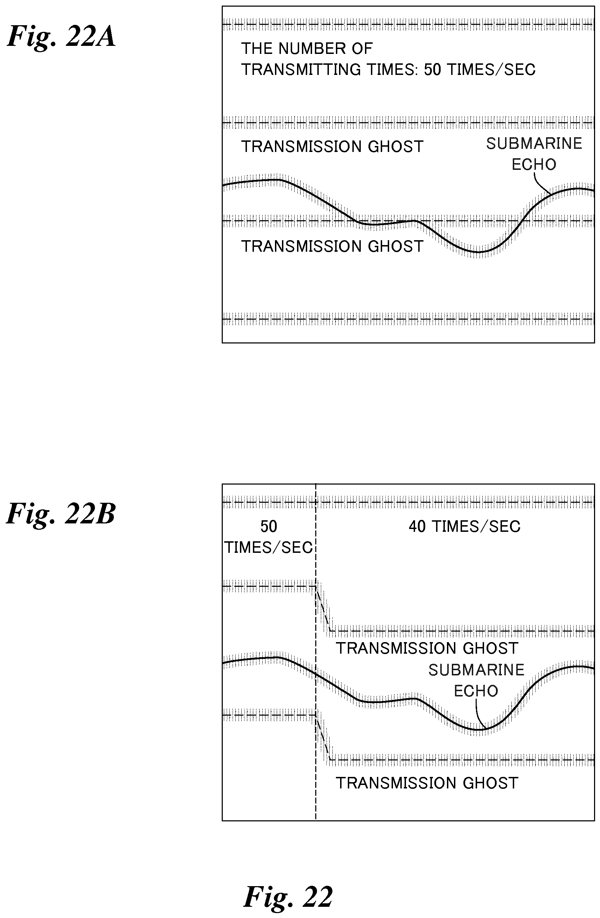

The second embodiment will now be schematically described with reference to Fig. 22. Fig. 22A shows a display image in the case where the number of transmitting times is equal to 50 times/sec. The transmission ghosts appear rectilinearly at an interval of a predetermined water depth. In this case, there is a portion where the submarine echo and the transmission ghosts overlap and the submarine echo is difficult to be partially recognized. Fig. 22B shows a display image in the case where the number of transmitting times is changed to 40 times/sec at a position shown by a broken line. Since a transmitting interval becomes long, an interval of the water depth at which the transmission ghosts appear is further increased and the portion where the submarine echo and the transmission ghosts overlap and the submarine echo is difficult to be partially recognized disappears.

First, it is assumed that the number of transmitting times is equal to 50 times/sec and the submarine echo was detected between the transmission ghosts. When the sea bottom gradually becomes deep and the transmission ghosts and the submarine echo are liable to overlap, by changing the number of transmitting times from 50 times/sec to 40 times/sec, the submarine echo and the transmission ghosts do not overlap and the submarine echo can be detected between the transmission ghosts. An algorithm for changing the transmitting period will be described hereinbelow.

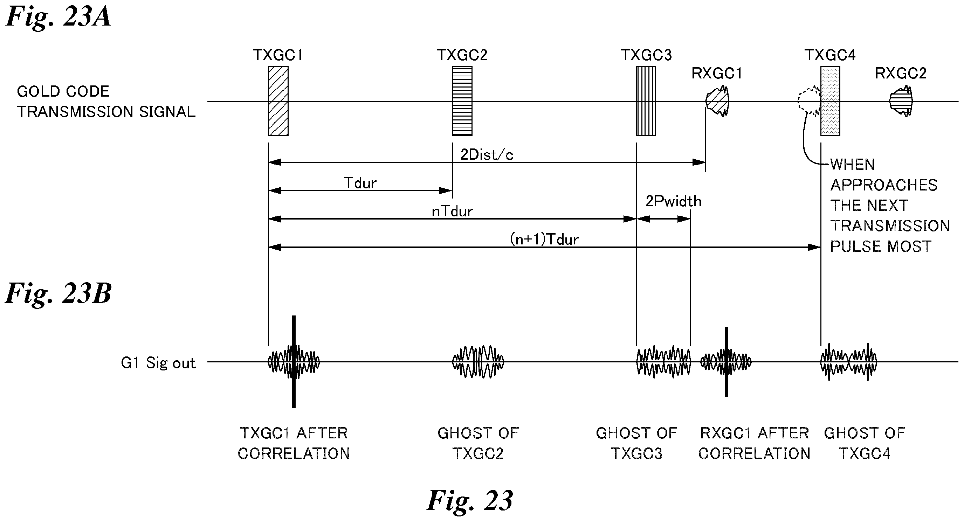

Such a condition that the reception signals after the correlation do not overlap with the transmission ghosts will now be described with reference to Fig. 23. Fig. 23A shows the transmission signals ($TXGC_1$, $TXGC_2$, $TXGC_3$, ...) which are sequentially transmitted and the reception signals ($RXGC_1$, $RXGC_2$, $RXGC_3$, ...). Fig. 23B shows signals after the correlation of those transmission signals. They are the reception signals in which the waveform having the steep peak after the correlation corresponds to the transmission signal. Parameters are defined as follows.

Transmitting period $T_{int} = M$ (1/sec)

Transmitting interval $T_{dur} = 1/M$ (sec)

Distance to the target $D_{ist}$ (m)

Underwater sound velocity c (m/sec)

Transmission pulse width $P_{width}$

A condition in which the reception signals do not overlap with the transmission pulses is that the transmitting period is varied so that the reception signal appears between the transmission signal of the nth time and the transmission signal of the (n+1)th time. It is expressed by the following numerical expression.

$$nT_{dur} + 2P_{width} < 2D_{ist}/c < (n+1)T_{dur} - P_{width}$$

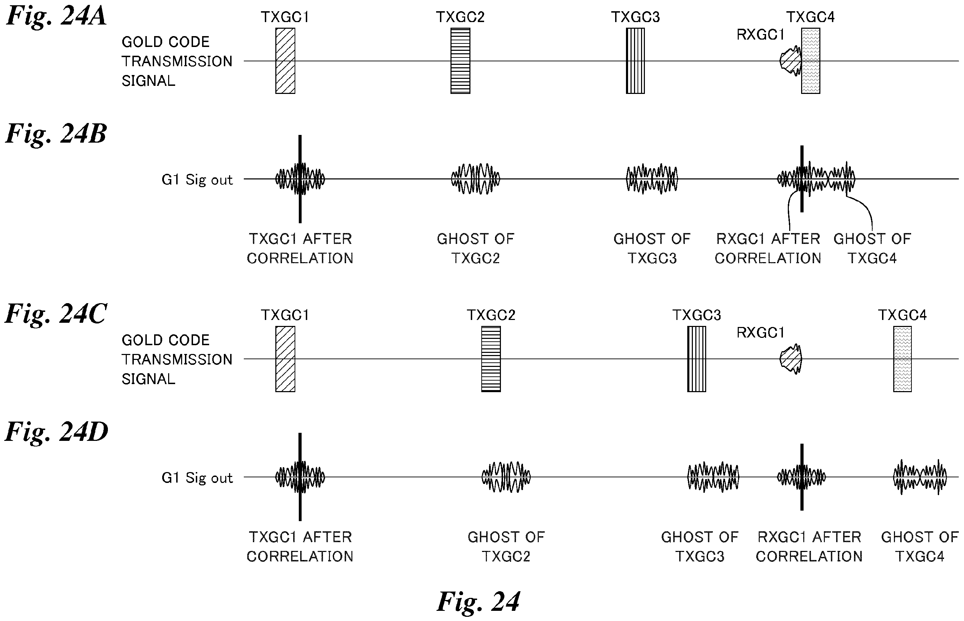

Fig. 24A shows a gold code transmission signal in which the number of transmitting times is equal to, for example, 50 times/sec. Fig. 24B shows an output signal after the correlation. Figs. 24A and 24B show a state (state just before the overlap) where the reception signal $RXGC_1$ corresponding to the transmission signal $TXGC_1$ fairly approaches the ghost of the transmission signal $TXGC_4$. Thus, since a display of the submarine echo is very close to a display of the transmission ghost, a display of the submarine echo is difficult to be observed.

Therefore, the number of transmitting times is changed to 40 times/sec by the user's operation or automatically. Fig. 24C shows a gold code transmission signal after the change. Fig. 24D shows an output signal after the correlation. By processing as mentioned above, the timing of the reception signal $RXGC_1$ can be set to timing between the third transmission signal and the fourth transmission signal, and a display of the submarine echo can be easily observed.

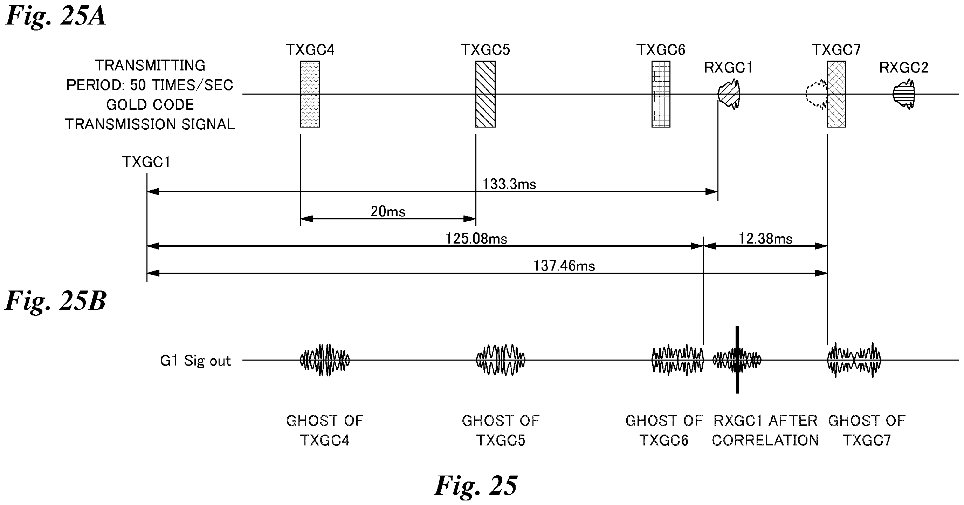

A relation between the transmission ghost at the time when the depth of the sea bottom is equal to 100 m under the following conditions and the reception signal after the correlation is specifically calculated. Parameters in this case are defined as follows. Fig. 25 shows specific values.

Transmitting period $T_{int}$ = M (1/sec) = 50 times

Transmitting interval $T_{dur}$ = 1/M (sec) = 20 msec

Distance to the target $D_{ist}$ (m) = 100 m

Underwater sound velocity c (m/sec)

Transmission pulse width $P_{width}$ = 2.54 msec

Transmitting frequency $f_{req}$ = 200 kHz

A condition in which the reception signals do not overlap with the transmission pulses is defined by the following expression. Since the time $2D_{ist}/c$ from the transmission 1 to the target is equal to 133.3 msec, the reception signals from the target are input for a period of time between the transmission of the sixth time and the transmission of the seventh time under the foregoing conditions.

$$nT_{dur} + 2P_{width} < 2D_{ist}/c < (n+1)T_{dur} - P_{width}$$

$$= 6 \times 20 + 2 \times 2.54 < 2 \times 100/1500 < 7 \times 20 - 2.54$$

$$= 125.08 < 133.3 < 137.46$$

In this example, it will be understood that when the reception signals from the target exist for a period of time between 125.08 msec and 137.46 msec, the transmission ghosts and the reception signals do not overlap.

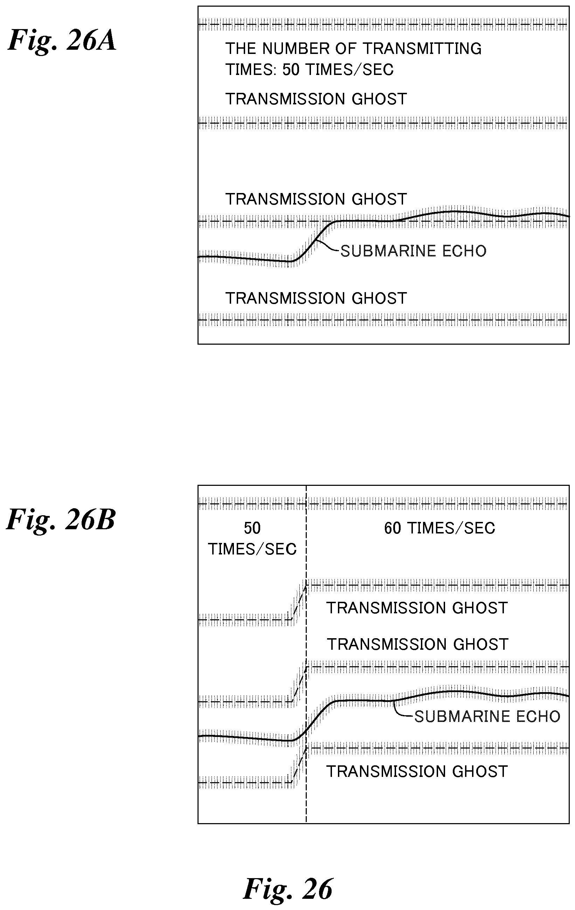

In the foregoing description, the number of transmitting times is reduced, thereby preventing that the transmission ghosts and the reception signals overlap. However, on the contrary, it is also possible to construct in such a manner that the number of transmitting times is increased, thereby preventing that the transmission ghosts and the reception signals overlap. Or, the number of transmitting times can be also increased or decreased. Fig. 26 shows an example in which the number of transmitting times is increased, thereby preventing that the submarine echo and the transmission ghosts overlap. In this example, as shown in Fig. 26A, the sea bottom gradually becomes shallow and the submarine echo and the transmission ghosts overlap. As shown in Fig. 26B, just before the submarine echo and the transmission ghosts are going to overlap, the number of transmitting times is increased and the transmitting interval is narrowed, thereby avoiding that the transmission ghosts and the submarine echo overlap.

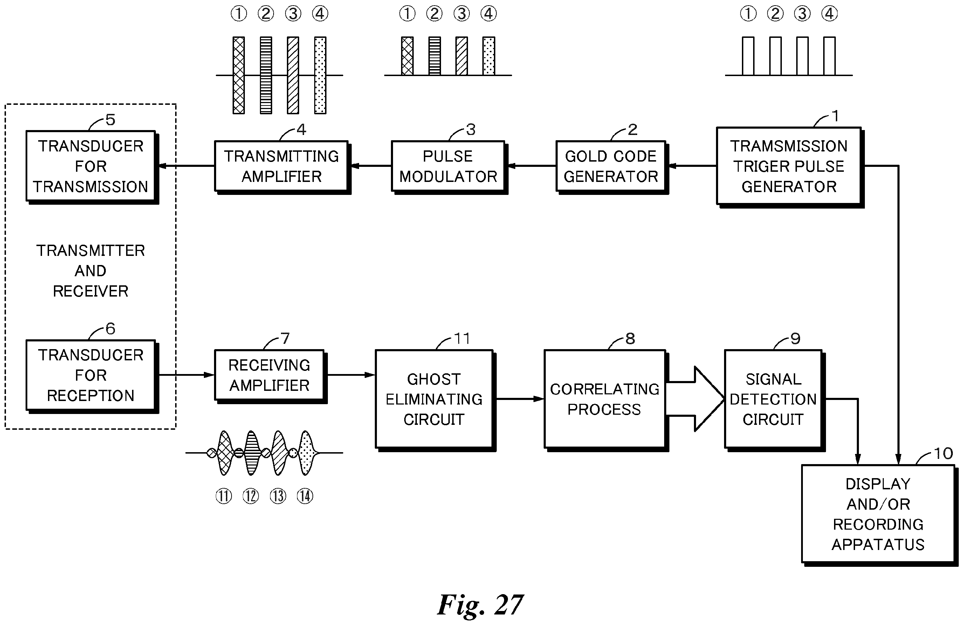

Fig. 27 shows a block diagram of a construction of the second embodiment and it is a construction in which a transmitting period change calculating circuit 16 is added to the echo sounding apparatus shown in Fig. 5. Although Fig. 27 shows an example in which the ghost eliminating circuit 11 according to the first embodiment is provided, it is not always necessary to provide the ghost eliminating circuit 11. The transmitting period change calculating circuit 16 is connected to the transmission trigger pulse generator 1 and is a circuit for varying the transmitting period. An output of the signal detecting circuit 9 is supplied to the transmitting period change calculating circuit 16.

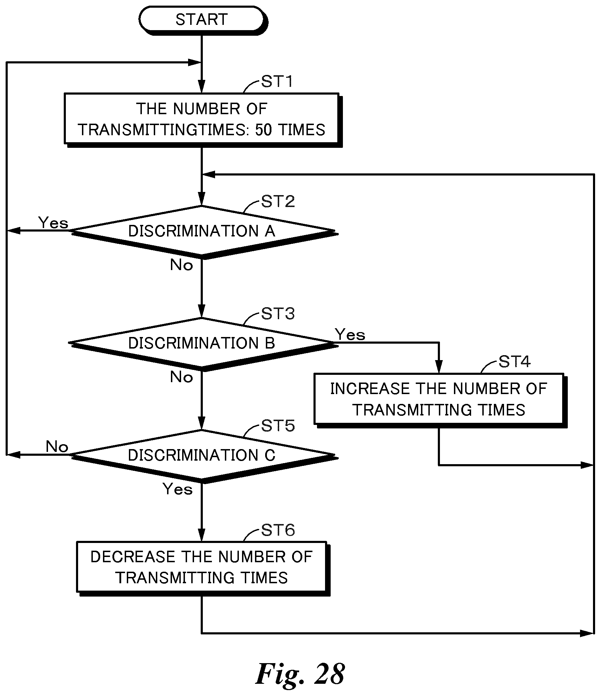

The operation of the transmitting period change calculating circuit 16 will be described with reference to a flowchart of Fig. 28. First, the number of transmitting times is set to a default value of, for example, 50 times/sec (step ST1).

In step ST2 (discrimination A), whether or not a submarine echo exists between the transmission ghosts is discriminated. That is, whether or not the condition (shown by the foregoing numerical expression) in which the reception signals do not overlap with the transmission pulses is satisfied is discriminated. If a discrimination result is YES, the transmission is continued as it is at a rate of 50 times/sec.

If the discrimination result is NO in step ST2 (discrimination A), a processing routine advances to step ST3 (discrimination B).

In step ST3 (discrimination B), as shown in Fig. 26, whether or not the water depth of the measurement target gradually becomes shallow is discriminated. If a discrimination result is YES, the processing routine advances to step ST4. In step ST4, the number of transmitting times is increased, thereby preventing that the reception signals overlap with the ghosts. If the discrimination result of step ST3 is NO, the processing routine advances to step ST5 (discrimination C).

In step ST5 (discrimination C), as shown in Fig. 22, whether or not the water depth of the measurement target gradually becomes deep is discriminated. If a discrimination result is YES, the processing routine advances to step ST6. In step ST6, the number of transmitting times is decreased, thereby preventing that the reception signals overlap with the ghosts. If the discrimination result of step ST5 is NO, the processing routine advances to step ST1.

The foregoing processes are nothing but an example and the discrimination about whether the number of transmitting times is increased or decreased may be made in a manner opposite to that mentioned above. This is because, in this case, although the submarine echo and the transmission ghosts intersect momentarily, the submarine echo appears between the transmission ghosts after that.

<3. Modification>

Although the embodiments of the invention have specifically been described above, the invention is not limited to the foregoing embodiments but various kinds of modifications based on the technical idea of the invention are possible. For example, the constructions, methods, steps, shapes, materials, numerical values, and the like mentioned in the foregoing embodiments are nothing but examples. Different constructions, methods, steps, shapes, materials, numerical values, and the like may be used in accordance with necessity. For example, the invention can be also applied to a multibeam echo sounding apparatus or an aperture synthesizing sonar.

[Reference Signs List]

| | |
|---|---|
| 1 | Transmission trigger pulse generator |
| 2 | Gold code generator |
| 3 | Pulse modulator |
| 5 | Transmitter |
| 6 | Receiver |
| 8 | Correlator |
| 10 | Display and/or recording apparatus |
| 11 | Ghost eliminating circuit |
| 16 | Transmitting period change calculating circuit |
| SR | Shift register |
| $EXA_1 \sim EXA_{127}$ | Arithmetic operating circuits |

**Claims**

1. An echo sounding apparatus which is attached to a moving object and detects a measurement target in the water, comprising:

a transmission signal forming unit having a pseudo noise sequence generating circuit for generating a pseudo noise sequence signal and a modulating circuit for forming a transmission signal by modulating a carrier signal by the pseudo noise sequence signal of transmission timing;
a transmitting unit for transmitting the transmission signal as an ultrasonic wave into the water;
a receiving unit for receiving a reception signal including a true echo, a ghost of the transmission signal, and a ghost of the reception signal;

a correlator for measuring a distance to the measurement target on the basis of a time difference between the transmission signal and the true echo by executing a correlating process to the reception signal by the pseudo noise sequence signal; and

a ghost eliminating circuit for eliminating the ghost of the transmission signal and/or the ghost of the reception signal,

wherein assuming that a velocity of the sound wave in the water is equal to Vu and the distance to the measurement target is equal to D, a period of the transmission signal is set to a value of (2D/Vu) or less.

2. An echo sounding apparatus according to claim 1, wherein the ghost of the transmission signal is eliminated by subtracting a transmission signal ghost replica from the reception signal.

3. An echo sounding apparatus according to claim 1, wherein the ghost of the transmission signal is eliminated by subtracting a transmission signal replica from an output of the correlator.

4. An echo sounding apparatus according to claim 1, wherein the modulating circuit forms the transmission signal by phase-modulating a carrier by the pseudo noise sequence.

5. An echo sounding apparatus according to claim 1, wherein a correlation is detected by data obtained by sampling the echo at a frequency which is two or more times as high as a carrier frequency and the pseudo noise sequence.

6. An echo sounding method of detecting a measurement target in the water by an echo sounding apparatus attached to a moving object, comprising the steps of:

generating a pseudo noise sequence signal by a pseudo noise sequence generating circuit and forming a transmission signal by modulating a carrier signal by the pseudo noise sequence signal of transmission timing;

transmitting the transmission signal as an ultrasonic wave into the water;

receiving a reception signal including a true echo, a ghost of the transmission signal, and a ghost of the reception signal;

measuring a distance to the measurement target on the basis of a time difference between the transmission signal and the true echo by executing a correlating process to the reception signal by a correlator by the pseudo noise sequence signal; and

eliminating the ghost of the transmission signal and/or the ghost of the reception signal by a ghost eliminating circuit,

wherein assuming that a velocity of the sound wave in the water is equal to Vu and the distance to the measurement target is equal to D, a period of the transmission signal is set to a value of (2D/Vu) or less.

7. An echo sounding apparatus which is attached to a moving object and detects a measurement target in the water, comprising:

a transmission signal forming unit having a pseudo noise sequence generating circuit for generating a pseudo noise sequence signal and a modulating circuit for forming a transmission signal by modulating a carrier signal by the pseudo noise sequence signal of transmission timing;

a transmitting unit for transmitting the transmission signal as an ultrasonic wave into the water;

a receiving unit for receiving a reception signal including a true echo, a ghost of the transmission signal, and a ghost of the reception signal;

a correlator for measuring a distance to the measurement target on the basis of a time difference between the transmission signal and the true echo by executing a correlating process to the reception signal by the pseudo noise sequence signal; and

a transmitting period changing circuit for changing a transmitting interval of the transmission signal so that timing of the true echo does not overlap with timing of the transmission ghost,

wherein assuming that a velocity of the sound wave in the water is equal to Vu and the distance to the measurement target is equal to D, a period of the transmission signal is set to a value of (2D/Vu) or less.

8. An echo sounding method of detecting a measurement target in the water by an echo sounding apparatus attached to a moving object, comprising the steps of:

generating a pseudo noise sequence signal by a pseudo noise sequence generating circuit and forming a transmission signal by modulating a carrier signal by the pseudo noise sequence signal of transmission timing;

transmitting the transmission signal as an ultrasonic wave into the water;

receiving a reception signal including a true echo, a ghost of the transmission signal, and a ghost of the reception signal;

measuring a distance to the measurement target on the basis of a time difference between the transmission signal and the true echo by executing a correlating process to the reception signal by a correlator by the pseudo noise sequence signal; and

changing a transmitting interval of the transmission signal by a transmitting period changing circuit so that timing of the true echo does not overlap with timing of the transmission ghost,

wherein assuming that a velocity of the sound wave in the water is equal to Vu and the distance to the measurement target is equal to D, a period of the transmission signal is set to a value of (2D/Vu) or less.

*Fig. 1*

**Fig. 2**

EP 3 605 144 A1

## Fig. 3A

TRANSMISSION                                                        SUBMARINE

WHEN 2D/1500<T

$2D/1500$

T

## Fig. 3B

TRANSMISSION            TRANSMISSION      SUBMARINE

WHEN 2D/1500>T

$2D/1500$

T                  T                      T

FD

## Fig. 3

SHIP VELOCITY V [m/sec]

RESOLUTION △H IN
THE HORIZONTAL
DIRECTION

DEPTH D

*Fig. 4*

*Fig. 5*

SHIFT CLOCK

SIGNAL INPUT

SHIFT REGISTER (127 X 4 X 8 = 4064 STEPS) — SR

EXA1 — EXCLUSIVE OR OF GOLD CODE G1 + ADDING CIRCUIT (4064 CIRCUITS) → G1 Sig out

EXA2 — EXCLUSIVE OR OF GOLD CODE G2 + ADDING CIRCUIT (4064 CIRCUITS) → G2 Sig out

EXA127 — EXCLUSIVE OR OF GOLD CODE G127 + ADDING CIRCUIT (4064 CIRCUITS) → G127 Sig out

R1 — REPLICA (4064 BITS) OF GOLD CODE G1

R2 — REPLICA (4064 BITS) OF GOLD CODE G2

R127 — REPLICA (4064 BITS) OF GOLD CODE G127

*Fig. 6*

EP 3 605 144 A1

G1 Sig out

G2 Sig out

G3 Sig out

G127 Sig out

*Fig. 7*

*Fig. 8*

GOLD
SEQUENCE

| 1 | 1 | 1 | 0 | 1 | 1 |

CARRIER
(200kHz)

0    50    100    150    200    250    300    350

*Fig. 9*

EP 3 605 144 A1

SUBMARINE
ECHO OF
TRANSMISSION A

SUBMARINE
ECHO OF
TRANSMISSION B

SUBMARINE
ECHO OF
TRANSMISSION A

TRANSMISSION A     TRANSMISSION B     TRANSMISSION A     TRANSMISSION B     TRANSMISSION A

2D／1500

2D／1500

T          T          T

*Fig. 10*

## Fig. 11A

## Fig. 11B

## Fig. 11

*Fig. 12A*

TRANSMISSION SIGNAL     RECEPTION SIGNAL

time [ms]

*Fig. 12B*

RECEPTION SIGNAL

time [ms]

*Fig. 12C*

SUBMARINE ECHO

time [ms]

*Fig. 12*

**Fig. 13**

EP 3 605 144 A1

## Fig. 14A

RAW WAVEFORM OF
RECEPTION SIGNALS

TXGC1　TXGC2　TXGC3　TXGC4
RXGC1　RXGC2

## Fig. 14B

GHOST REPLICAS OF
TRANSMISSION SIGNALS

GTX1　GTX2　GTX3　GTX4

## Fig. 14C

WAVEFORMS OBTAINED BY
SUBTRACTING TRANSMISSION
GHOST REPLICAS FROM
THE RAW WAVEFORM OF
RECEPTION SIGNALS

## Fig. 14D

WAVEFORM 1 AFTER
CORRELATING PROCESS

WAVEFORM 2 AFTER
CORRELATING PROCESS

## Fig. 14

EP 3 605 144 A1

*Fig. 15*

*Fig. 16A*

TXGC1   TXGC2   TXGC3   TXGC4                    TXGC12

GOLD CODE
TRAMSMISSION
SIGNAL

*Fig. 16B*

G1 Sig out
=G1replica

G2 Sig out
=G2replica

G3 Sig out
=G3replica

G127 Sig out
=G127replica

*Fig. 16*

EP 3 605 144 A1

**Fig. 17A**

RAW WAVEFORMS OF
TRANSMISSION
SIGNALS AND
RECEPTION SIGNALS

TXGC1  TXGC2  TXGC3  TXGC4

RXGC1  RXGC2

**Fig. 17B**

G1 Sig out

**Fig. 17C**

G1replica

**Fig. 17D**

G1 Dif. Sig out
=G1 sig out − G1replica

G2 Dif. Sig out
=G2 sig out − G2replica

*Fig. 17*

Fig. 18

**Fig. 19A**

**Fig. 19B**

**Fig. 19**

*Fig. 20*

EP 3 605 144 A1

EP 3 605 144 A1

## Fig. 21A

RAW WAVEFORMS OF
TRANSMISSION SIGNALS
AND RECEPTION SIGNALS

TXGC1  TXGC2  TXGC3  TXGC4  TXGC5  TXGC6  TXGC7
RXGC126  RXGC127  RXGC1  RXGC2  RXGC3  RXGC4  RXGC5

## Fig. 21B

RECEIVED SIGNAL G1
Dif. Sig out AFTER
ELIMINATION OF
TANSMISSION GHOST

## Fig. 21C

ONLY SIGNAL HAVING
STEEP PEAK IS
EXTRACTED

## Fig. 21D

RECEPTION SIGNAL G2
Dif. Sig out AFTER
ELIMINATION OF
TANSMISSION GHOST

## Fig. 21E

ONLY SIGNAL HAVING
STEEP PEAK IS
EXTRACTED

*Fig. 21*

*Fig. 22A*

THE NUMBER OF
TRANSMITTING TIMES: 50 TIMES/SEC

TRANSMISSION GHOST

SUBMARINE
ECHO

TRANSMISSION GHOST

*Fig. 22B*

50
TIMES/SEC

40 TIMES/SEC

TRANSMISSION GHOST

SUBMARINE
ECHO

TRANSMISSION GHOST

*Fig. 22*

## Fig. 23A

GOLD CODE
TRANSMISSION SIGNAL

TXGC1   TXGC2   TXGC3   RXGC1   TXGC4   RXGC2

$2Dist/c$

$Tdur$

$nTdur$

$2Pwidth$

$(n+1)Tdur$

WHEN
APPROACHES
THE NEXT
TRANSMISSION
PULSE MOST

## Fig. 23B

G1 Sig out

TXGC1 AFTER   GHOST OF   GHOST OF   RXGC1 AFTER   GHOST OF
CORRELATION   TXGC2      TXGC3      CORRELATION   TXGC4

*Fig. 23*

EP 3 605 144 A1

*Fig. 24A*

TXGC1          TXGC2          TXGC3          TXGC4

GOLD CODE
TRANSMISSION
SIGNAL

RXGC1

*Fig. 24B*

G1 Sig out

TXGC1 AFTER       GHOST OF        GHOST OF        RXGC1 AFTER     GHOST OF
CORRELATION        TXGC2            TXGC3         CORRELATION      TXGC4

*Fig. 24C*

TXGC1          TXGC2          TXGC3                        TXGC4

GOLD CODE
TRANSMISSION
SIGNAL

RXGC1

*Fig. 24D*

G1 Sig out

TXGC1 AFTER       GHOST OF        GHOST OF        RXGC1 AFTER     GHOST OF
CORRELATION        TXGC2            TXGC3         CORRELATION      TXGC4

*Fig. 24*

## Fig. 25A

TRANSMITTING PERIOD: 50 TIMES/SEC GOLD CODE TRANSMISSION SIGNAL

TXGC4    TXGC5    TXGC6  RXGC1    TXGC7  RXGC2

TXGC1

133.3ms

20ms

125.08ms    12.38ms

137.46ms

## Fig. 25B

G1 Sig out

GHOST OF TXGC4    GHOST OF TXGC5    GHOST OF TXGC6    RXGC1 AFTER CORRELATION    GHOST OF TXGC7

*Fig. 25*

*Fig. 26A*

THE NUMBER OF TRANSMITTING
TIMES: 50 TIMES/SEC

TRANSMISSION GHOST

TRANSMISSION GHOST

SUBMARINE ECHO

TRANSMISSION GHOST

*Fig. 26B*

50
TIMES/SEC

60 TIMES/SEC

TRANSMISSION GHOST

TRANSMISSION GHOST

SUBMARINE ECHO

TRANSMISSION GHOST

*Fig. 26*

Fig. 27

*Fig. 28*

## INTERNATIONAL SEARCH REPORT

International application No.

PCT/JP2017/011426

A. CLASSIFICATION OF SUBJECT MATTER

*G01S7/526*(2006.01)i, *G01S7/524*(2006.01)i

According to International Patent Classification (IPC) or to both national classification and IPC

B. FIELDS SEARCHED

Minimum documentation searched (classification system followed by classification symbols)
G01S7/52-G01S7/64, G01S15/00-G01S15/96

Documentation searched other than minimum documentation to the extent that such documents are included in the fields searched
Jitsuyo Shinan Koho         1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2013-104811 A  (The Kansai Electric Power Co., Inc.),<br>30 May 2013 (30.05.2013),<br>paragraphs [0013], [0023], [0027] to [0029], [0038]; claim 1; fig. 4<br>(Family: none) | 1-6<br>7-8 |
| Y<br>A | WO 2013/088951 A1  (Murata Mfg. Co., Ltd.),<br>20 June 2013 (20.06.2013),<br>paragraphs [0041] to [0043], [0071]; fig. 8<br>& US 2014/0340993 A1<br>paragraphs [0052] to [0054], [0083]; fig. 8<br>& EP 2793044 A1           & CN 103988092 A | 1-6<br>7-8 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 June 2017 (14.06.17) | 27 June 2017 (27.06.17) |

| Name and mailing address of the ISA/<br>Japan Patent Office<br>3-4-3,Kasumigaseki,Chiyoda-ku,<br>Tokyo 100-8915,Japan | Authorized officer |
| | Telephone No. |

Form PCT/ISA/210 (second sheet) (January 2015)

**INTERNATIONAL SEARCH REPORT**

International application No.

PCT/JP2017/011426

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 6-347539 A  (NEC Corp.),<br>22 December 1994 (22.12.1994),<br>paragraph [0008]<br>(Family: none) | 1-6<br>7-8 |
| Y<br>A | JP 2002-131427 A  (Mitsubishi Heavy Industries,<br>Ltd.),<br>09 May 2002 (09.05.2002),<br>paragraph [0048]<br>(Family: none) | 4<br>1-3,5-8 |
| Y<br>A | WO 2011/102130 A1  (Panasonic Corp.),<br>25 August 2011 (25.08.2011),<br>paragraph [0077]<br>& US 2012/0055250 A1<br>paragraph [0093]<br>& CN 102449500 A | 5<br>1-4,6-8 |
| A | JP 9-068569 A  (Matsushita Electric Works,<br>Ltd.),<br>11 March 1997 (11.03.1997),<br>paragraphs [0009] to [0011]<br>(Family: none) | 1-8 |
| A | US 2011/0122729 A1  (HU Chao-Wen),<br>26 May 2011 (26.05.2011),<br>paragraph [0037]<br>& CN 102073040 A | 1-8 |

Form PCT/ISA/210 (continuation of second sheet) (January 2015)

**EP 3 605 144 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001083247 A

- JP 2006220436 A